# EUROPEAN PATENT APPLICATION

(11) **EP 1 126 387 A2**
(43) Date of publication of application: **22.08.2001**
(21) Application number: 01300327.2
(22) Date of filing: 16.01.2001
(51) Int. Cl.: G06F 17/30

(54) **System and method for linking information resources**

(30) Priority: 16.02.2000 GB 0003604
(71) Applicant: Empolis UK Limited, Swindon, Wiltshire SN3 5HQ (GB)
(72) Inventor: Moore, Graham David, Swinden, Wiltshire SN1 3PF (GB)
(74) Representative: Gill, David Alan

(57) **Abstract**

The present invention provides for a system for linking a plurality of information resources, the system comprising a server and a storage medium arranged to be accessed by the server and to store link structure information for each of the said plurality of resources the link structure information for each resource representing the link structure in which that information resource is included, wherein, responsive to a user request for one of said plurality of information sources, the server is arranged to retrieve the link structure information in which the requested one of the information resources is included, and wherein the information resource remains unmodified. The invention also provides a method for linking a plurality of information resources storing link structure information for each of the plurality of information resources, the link structure information for each information resource representing the link structure in which that information resource is included and, responsive to a user request for one of said plurality of information resources, retrieving the link structure information in which the requested one of the information resources is included and retaining the information resource in an unmodified state.

## Description

The present invention relates to a system and method for linking information resources.

The development of information technology has lead to a dramatic increase in the nature and variety of information that can be accessed to fulfill a particular requirement. As the volume of such information resources has increased, so has the variety of such resources and the nature of the various repositories where such information resources are stored.

Increasingly, user requirements dictate that two or more information resources need to be accessed or retrieved, sometimes simultaneously, so as to provide increasingly richer data streams and so deliver a complete response to a particular user, e.g. application request.

While the management of electronic information has to date been widely practised there has been no successful attempt at an appropriate management of the associations that can define relationships between different information resources.

While the information resources can be found as elements of a database, documents on a file system, or as data in a structured information repository, those requiring use of, and access to, the information resources have an increasing requirement to navigate to the appropriate information resource(s) in a quicker, more efficient and more accurate manner. Also, information processing applications require increasingly richer data streams and those involved in the information supply industry have a requirement for the ability to construct relevant webs of data from discrete information resources.

In all of the above-mentioned cases, the information resources are likely to be distributed, the authorship is likely to be undefined, and the information repositories themselves are likely to be different. Quite importantly, merely adding application specific changes to the data in order to support application processing is generally found to be unacceptable since it is an intention and requirement that the data remains neutral so that it can be reconfigured to suit the requirements of new products and uses. The addition of specific indicators that would otherwise assist in clearly defining the associations binding information resources together would be severely detrimental to such an approach. Thus, given the nature and basic requirements of current information resources, the associations that can serve to bind information resources together, i.e. so-called link information, cannot be inserted inside the content of the actual information resource.

It is an object of the present invention to provide for a system and method for linking information resources which does not suffer any one or more of the above disadvantages.

It is a further object of the present invention to provide for a system and method for linking information resources which does not require the addition of application specific indicators into the resource.

It is yet a further object of the present invention to provide for a system and method for linking information resources that allows for the linking of information resources without the need to change any of the resources being linked.

It is still a further object of the present invention to provide a system and method for linking information resources in which the links to the different resources are not provided in the resources.

According to one aspect of the present invention there is provided a system for linking a plurality of information resources, the system comprising a server and a storage medium arranged to be accessed by the server and to store link structure information for each of the said plurality of information resources, the link structure information for each resource representing the link structure in which that information resource is included, wherein, responsive to a user request for one of said plurality of information resources, the server is arranged to retrieve the link structure information in which the requested one of the information resources is included, and wherein the information resource remains unmodified.

A variety of information resources can therefore be seamlessly linked without requiring that any of the resources being linked be modified. The present invention allows linking between information resources, for example documents, and without the need to change either of the source nor target documents being linked and so removes the requirement that link structure information be inserted within the document content.

Preferably the system can be arranged to create a link document from an information resource and then delivering the link document for processing by the server; the server subsequently retrieving the link structure information for delivery to the storage medium.

Advantageously, the storage medium can comprise a standard database exhibiting standard data back-up features.

The system can also advantageously include a graphics tool for the display of the memory content. The graphics tool can advantageously serving to provide a nodal representation of the link structure information.

In particular, the server is associated with data-fetcher architecture for connection to a plurality of information resources. Further, the system can exhibit an extensible architecture to allow for the addition, or plug and play, of data-fetcher components.

The server can advantageously be arranged to respond to a request from a user, which can comprise an application source, for information streams and/or all link structure information associated with a particular information resource.

The server and data-fetcher architecture function such that all information resources are retrieved from their original location.

An embodiment of the present invention is arranged in particular for operation within protocols developed by W3C, the World Wide Web Consortium, an international industry consortium jointly hosted by the Massachusetts Institute of Technology Laboratory for Computer Science (MIT/LCS)in the United States of America; the Institute National de Recherche en Informatique et en Automatic (INRIA) in Europe; and the Keio University Shonan Fujisawa Campus in Japan.

As a further advantageous example, the server is arranged to parse an XLink, i.e. an XML file that defines links. Then, from such information, the server can be arranged to create an object model for each link defined. The object structure is advantageously then made persistent in a database which can comprise a relational model or an object-orientated database.

Preferably, the server is arranged to allow for the updating, deletion and addition of link structure information.

Further, the link structure information can define a link between discrete information resources such as discrete documents, particular data fragments or different parts/sections of the same information resource.

Anchors are provided within the arrangement and which serve to reference each resource. A link comprises a plurality of anchors with each anchor only leading to one resource and each resource advantageously having a unique identifier.

The link structure comprises a nodal configuration and can further include arcs which serve to define possible traversable routes between anchor nodes.

In particular, the link structure of the present invention employs out-of-line links which are defined externally and independently of the information resources arranged to be linked.

Advantageously, as each information resource is retrieved, and for each anchor that points into the resource, the link structure associated with that anchor is then arranged to be inserted at that relevant point as specified by the anchor within the information resource such that the arrangement appears as though the link had been created in an in-line manner.

The system is further arranged so as to include means for inserting the link structure information into the information content of a retrieved information resource that participates in the link. In particular, the system can be arranged to dynamically insert link information into the content of the retrieved resource, while the original information resource itself remains unchanged.

According to another aspect of the present invention there is provided a method for linking a plurality of information resources, comprising the steps of storing link structure information for each of the plurality of information resources, the link structure information for each information resource representing the link structure in which that information resource is included and, responsive to a user request for one of said plurality of information resources, retrieving the link structure information in which the requested one of the information resources is included and retaining the information resource in an unmodified state.

Preferably, the method includes creating a link document from an information resource and delivering the link document for subsequent processing for retrieval of the link structure information and the subsequent storage of the said retrieved link structure information.

Advantageously, the content of all information resources is retrieved from the original locations of such information resources.

Preferably, the method provides for parsing XML file that defines required links and subsequently creates an object model for each link defined.

Advantageously, the method employs creating a link structure exhibiting a nodal configuration and, most advantageously, creates a link structure employing out-of-line links which are defined externally and independently of the information resources.

According to a further feature, the method includes dynamically inserting link structure information into information content of a retrieved information resource that participates in the said link.

As will be appreciated from the above, the present invention allows for a link to be established between the information resources without requiring any change to the resource. This means that those responsible for creating information resources will not suffer the additional burden of concerns relating to the addition of link structure information since such information can be incorporated at a later stage in accordance with the present invention and without impacting on the content of the original information resource. Information resources over which no write permissions exist can therefore form part of a bidirectional link.

It becomes possible, in a simplified and appropriate manner, to build new composite information resources dynamically from a template link document. The node-inclusion exhibited within the present invention facilitates the provision of a template document that has associations with the actual content. This advantageously allows for the creation of, for example, dynamic documents having specific profiles and also the creation of virtual documents which serve to integrate the content from multiple locations so as to create a new composite document.

Advantageously, the invention allows for actual bi-directional links between different information resources such that if two or more documents are linked, it remains possible to navigate to other associated documents. This advantageously overcomes existing problems arising in relation to the modelling of bi-directional links since the need to create a large number of pointers serving to mimic the bi-directional links is avoided, as are the related maintenance problems.

The invention also provides for an improved manner in which sets of related information resources of a closely similar type can readily be grouped. Links are defined as being of specific types and anchors have roles allowing for the semantics of the links to be defined. This advantageously provides for a richer information environment in which to determine if a link should be pursued. This serves to provide an information system providing a user application with quick and accurate access to the appropriate information.

Further, links can be achieved between structured and unstructured information and so, for example, provides for a point within a structured document such as XML that can be linked to, for example, a Powerpoint slide display. This advantageously allows for the management of links between a variety of forms of data by means of the same mechanism, data storage and management tools. Also, the invention advantageously allows for the management of large repositories of link structure information whilst also linking information resources that are stored in a variety of different data repositories.

The linking system of the invention advantageously allow such repositories to continue using existing data storage mechanisms.

Further, links can advantageously be created using any application that creates XML XLink documents.

The invention is described further hereinafter, by way of example only, with reference to the accompanying drawings in which:
Fig. 1 is a block diagram of a system architecture embodying the present invention;
Fig. 2 is a block diagram of architecture associated with the embodiment of Fig. 1;
Fig. 3 is a block diagram serving to illustrate the manner in which links are created in accordance with an embodiment of the present invention;
Fig. 4 is a block diagram serving to illustrate the extraction of link information in accordance with an embodiment of the present invention;
Fig. 5 is a block diagram serving to illustrate information resource and link structure information merger in accordance with an embodiment of the present invention;
Fig. 6 is a block diagram serving to illustrate link structure information as employed within an embodiment of the present invention;
Fig. 7 is a block diagram serving to illustrate arc paths associated with an embodiment of the present invention;
Fig. 8 is a block diagram serving to illustrate the operation of a system embodying the present invention;
Fig. 9 is a block diagram illustrating use of a system embodying the present invention within a web application; and
Fig. 10 is a block diagram illustrating use of a system embodying the present invention within a batch process.

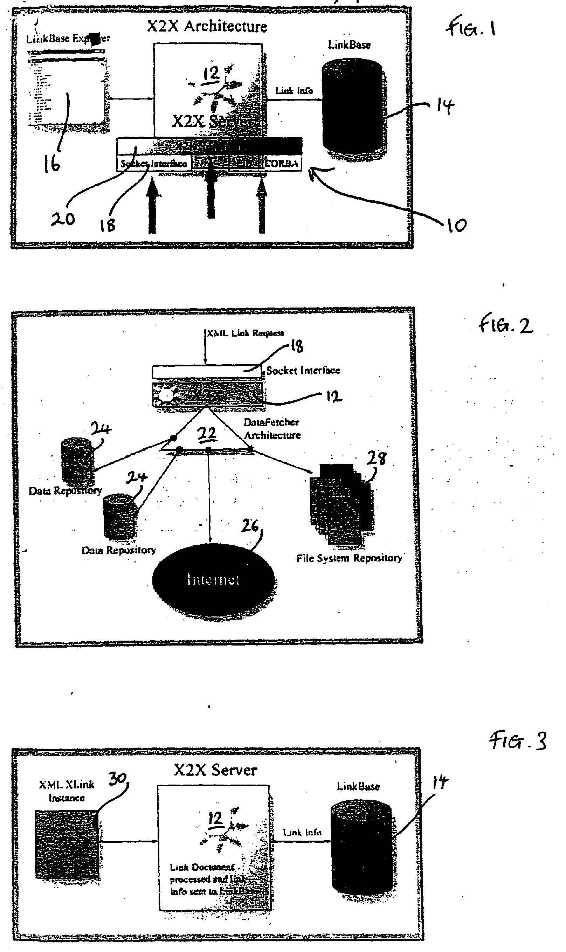

Turning first to Fig. 1 there is illustrated a general architecture of a system 10 embodying the present invention and which comprises a server 12 arranged to provide link information to a storage medium 14 the contents of which can be displayed by means of a graphics tool 16. Access to the server 12 in order to create the link structure information as stored on the storage medium 14 is by means of a socket interface 18 which is itself connected to the server 12 by means of a server Application Programming Interface (API) 20. Additionally access to the server 12 can be achieved directly through the API.

Further structure is illustrated in Fig. 2 which indicates the manner in which a link request received at the socket interface 18 is delivered to the server 12 which itself provides for access, via the data-fetcher architecture 22, to a variety of information resources such as data repositories 24, a computer network such as the Internet 26 and a file system repository 28.

The overall system architecture illustrated by Figs. 1 and 2 allows for the creation of the appropriate link structure information relevant to each of the information resources found within the repositories 24-28 and for the storage of that information as required in the storage medium 14.

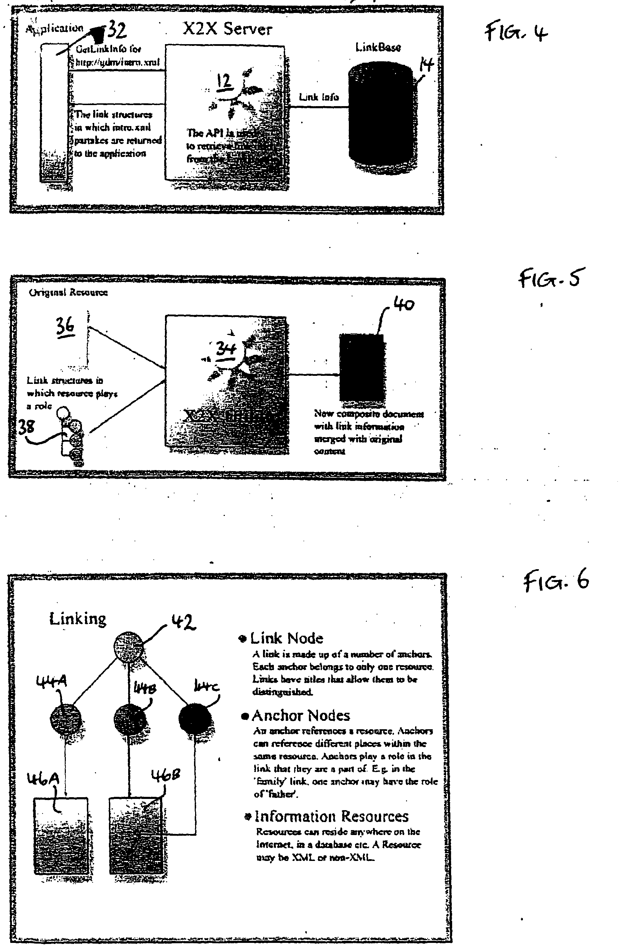

Fig. 3 offers an illustration of the manner in which the server 12 is employed to create the required link structure information. The link structure information can be created by any application that can create an XML document. The XLink 30 being an instance of XML such that all XLink documents comprise an XML document. The XLink document is created using the syntax defined by the proposed XLink recommendation and once this is completed, the XLink document is delivered to the server 12 for processing so that the link information can then be added to the storage medium 14.

As mentioned, the storage medium 14 contains all of the link structure information that is created and submitted as XLink documents and link objects created using the server API 20. The contents of the storage medium 14 can be viewed by the graphical tool 16 which is arranged to provide a nodal representation of the links stored within the storage medium 14.

The server 12 is also arranged so as to extract any required link information and a particularly important aspect of the present invention is the ability of the server 12 to retrieve link information that is relevant to a requested/accessed information resource. The requirement is to retrieve not only the requested information from the information resource but also all of the link structure information with which that particular resource is associated. As illustrated in Fig. 4, the present invention allows for an application 32 to request particular information streams and to also request all of the link structure information associated with a particular resource. The invention operates so as to retrieve all resources from their original location or repository such that no data is copied into the storage medium 14.

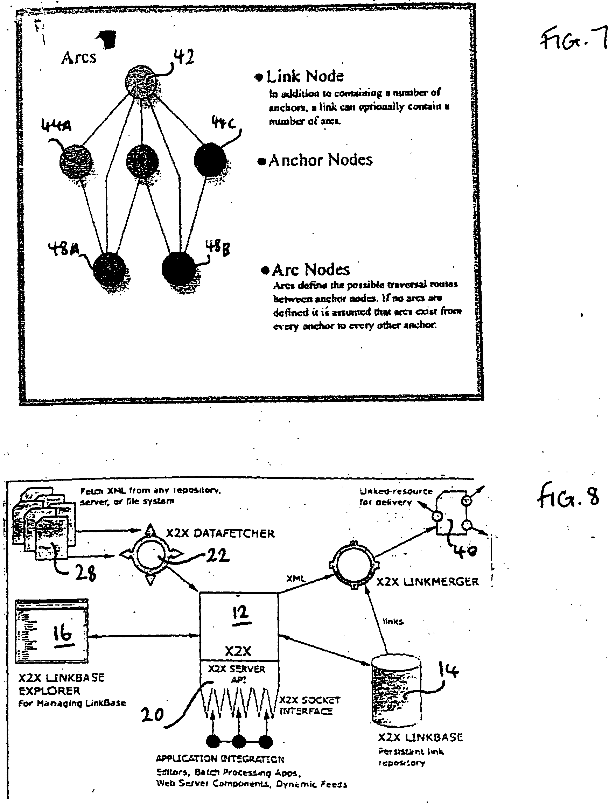

As a further step subsequent to the extraction of link information, the invention advantageously can allow for the delivery of dynamically enhanced information resources to a client application or user and such an aspect is illustrated with reference to Fig. 5.

At some point in the information retrieval process, it may prove advantageous to insert the externally defined links into the content of one of the information resources that participates in a link. As illustrated in Fig. 5, the server 12 provides for a utility 34 for processing an original resource 36 and the link structure 38 in which said resource plays a role and as retrieved from the storage medium 14 illustrated with reference to Fig. 4. The utility 34 serves to combine the original resource 36 link structure 38 so as to provide for a new composite document 40 with the relevant link information merged with the original document.

The requesting user, which may comprise a requesting application is then provided with the composite document which not only comprises the information resource specific to the initial request but also provides the complete link structure information serving to identify additional information resources that are in some way associated with, or relevant to, the initially requested/accessed resource. An advantageously rich data stream can then be returned to the requesting application/user to advantageously enhance the quality/completeness of the information returned. As will be appreciated, the original resource 36 which, in any case, did not require any link structure information to be inserted therein, or in any way remains unmodified since the utility 34 so as to provide for a newly created composite document.

Figs. 6 and 7 illustrate the concept of linking as found in the present invention and which include the concepts of links, anchors and arcs and which are employed in a system embodying the present invention. Fig. 6 illustrates first a link node 42 connected to anchor nodes 44A-44C which are in turn, in the illustrated manner, connected to information resources 46A and 46B. An anchor node 44A-44C serves to reference a particular resource although it is possible for anchors to reference different locations within the same resource and, as mentioned above, information resources 46A, 46B can reside at any required location, for example, on a computer network such as the Internet or within a database etc. A link is actually made up of a number of anchors wherein each anchor belongs to only one resource. Each link can be provided with an identifier and related attributes which allow for software to distinguish between different links. Each link can also be considered as representing a particular type of relationship between a number of elements - which elements can comprise a document, data fragment or part of a particular document. Each anchor can be considered as a handle to a particular document, or indeed a particular location within a document, and each anchor can be assigned a role within the overall link structure.

In addition to the above-mentioned linking concept, arcs can be provided so as to offer control over the actual traversal routes between different nodes of the link structure. Fig. 7 illustrates the relationship between a link node 42 anchor nodes 44A-44C and arc nodes 48A, 48B.

As mentioned, the arcs define the possible traversal routes between anchor nodes and if no arcs are defined, the default position is that arcs exist between all anchors within the link structure.

It is a particular requirement of the present invention that links can be defined as out-of-line rather than in-line. In-line links define that the link information is embedded within the content, quite often that the location of one of the anchors of the link. However, in accordance of the present invention, out-of-line links are provided and are defined externally and independently of any of the information resources being linked. This provides for a particularly advantageous and powerful linking model since it is now possible to link information resources together without having to actually modify any of the resources being linked.

The following provides an example of an out-of-line link and associates three documents and wherein the syntax adheres to the latest W3C and XLink proposed recommendation.
*<link xlink:type-"extended" xlink:title="family">*
*<loc ID-"a1"*
*Xlink:type-"locator"*
*Xlink:href+"father.jpg"*
*Xlink:title-"photo of father"*
*Xlink:roles+"father"/>*
*<loc ID+"a2"*
*Xlink:type-"locator"*
*Xlink:href+"motherdescription.xml"*
*Xlink:title+"description of mother"*
*Xlink:role-"document"/>*
*<loc ID-"a3"*
*Xlink:type-"locator"*
*Xlink:href+"birthdaughter.xml"*
*Xlink:title+"Daughter Birth Certificate"*
*Xlink:role-"document"/>*
*</link>*

It should be appreciated that the document is independent over any of the resources being linked and it expresses a link/association which involves three anchors wherein each anchor displays a specific role within the type of link concerned. The anchor also serves as a reference to the actual resource that is to be linked.

The present invention advantageously exhibits a component that understands Link syntax and can then create the appropriate linked object instances and add these into the storage medium 14. It is likewise possible to develop a component that could employ the application programing interfaces to add link objects that were created as a result of parsing link information created in a different syntax providing of course it expressed and utilized the same abstract concepts as illustrated above.

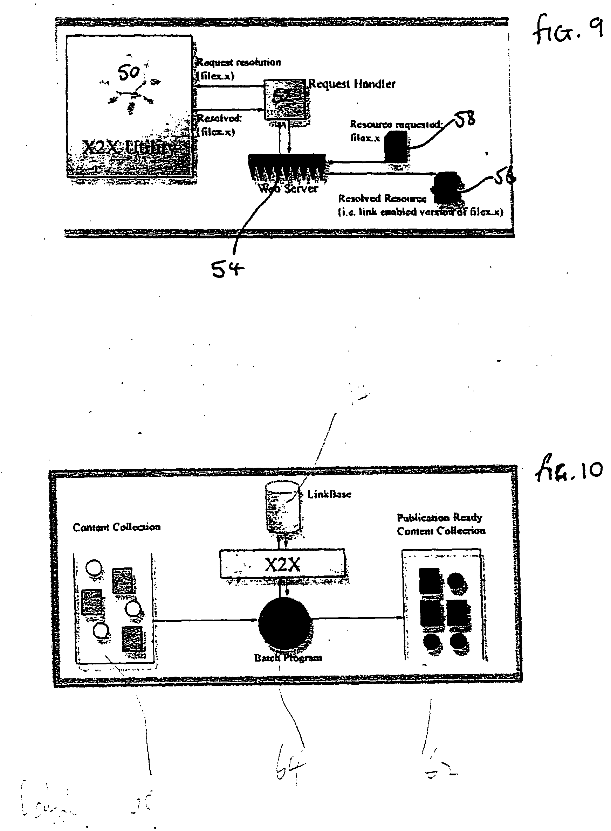

Turning now to Fig. 8 there is provided an overall illustration of a system embodying the present invention and which illustrates the advantageous provision of linking between information resources without the need to change any of the resources being linked. Integration to, for example, an application request is provided by means of the socket interface 18 and server API 20, the server API 20 having access to the storage medium 14 so as to write any required link structure information thereto and to retrieve any required link structure information therefrom in accordance with a request to obtain an appropriate information resource 28 via the data-fetcher architecture 22. If dynamic merging is required, the XML information resource is arranged to be merged with the appropriate link structure information held in the storage medium 14 by means of the utility 34 so as to provide for the composite linked information resource 40 ready for delivery in response to the original request.

The graphics tool 16 provides for means for monitoring and managing the contents of the storage medium 14.

As will be appreciated, the present invention presents an extensible architecture so as to allow information resources to reside in any data repository and, most importantly, serves to store a link structure information independently of any of the informationary sources concerned and then provides for the dynamic insertion of such externally generated link structures into the information resources on demand.

The present invention is arranged to store all of the link structure information within an ODBC/JDBC enabled database, for example an Oracle or Microsoft SQL Server and the illustrated embodiment of the present invention is initially developed in JAVA for the cross platform operation.

Such a stable system as now offered by the present invention advantageously allows for the association of different information resources regardless of their actual location and advantageously employs linking concepts so as to allow structured information objects such as XML to be associated with information lacking structure. The architecture exhibited by the present invention enables users to store data in the appropriate repository of choice while adherence to XLink means that the link structure information can be created using a variety of applications.

The system of the present invention can function independently of the actual storage, creation and delivery applications employed and can be integrated into any static or dynamic application or service.

It is therefore possible to deliver richer information streams to end users all having little or no impact on the existing data management procedures.

Fig. 9 illustrates one example of the use of an embodiment of the present invention in which the system is integrated into a web application. In this example, the system provides a utility 50 which can be integrated by means of a request handler 52 with a web server 54 to dynamically construct link-enabled versions 56 of requested resources 58.

In operation, when a particular request arrives from the web server 54 for a particular resource 56, the request handler 52 communicates with the server utility 50 to ascertain if the requested resource is a member of, or associated with, any link structure. If it is such a member, the utility 50 fetches the resource 56 but before delivering the resource to the requesting application, the utility 50 serves to dynamically insert the relevant link structures in the resource as though they had been created in the original resource. The resulting link-enabled resource 58 can then be further transformed for display on non-XML browsers or can be simply displayed in an as is. The user of the requesting information can then browse the information resource 58 and follow any links without in any way being aware of the prior processing that has occurred.

Turning now to Fig. 10, there is illustrated a further example of the use of a system embodying the present invention within a batch process.

In some instances, it can prove desirable to retain work-in-progress separate from information resources being delivered to end users. However, such requirement prohibits the dynamic access of an information resource repository. The present invention provides for a solution to this problem insofar as it serves to produce a set of deliverable information resources. This set of documents can then be used as files on the file system or alternatively loaded into a delivery repository.

A system embodying the present invention can play an important role in the preparation of such a deliverable data set. Given that the appropriate links can be created such that they can link information resources no matter where such resources reside, all the relevant link structure information that is required for a given application can be created, or authored, using an authoring repository and it is therefore advantageously easier to determine whether a link has perhaps been broken by an edit to a information resource such as a document. With reference to Fig. 10, it should be appreciated that the process of creating the deliverable data set with a system embodying the present invention is an advantageously simple one. For each document that is required from a content collection 60 for the deliverable document set 62, it is necessary to fetch that document and process it having regard to the related link structure found in the storage medium 14. Such processing requires the dynamic insertion of relevant link structures as retrieved from the storage medium 14, by means of a batch program 64 so as to provide for a complete set of inter-related documents 62.

Further, part of the batch process is arranged to perform an additional transformation on the XML document in order to display the relevant content and link structure information.

With regard to the above-mentioned embodiment, the server was developed in JAVA 1.2 and is arranged to function on any JAVA 1.2 enabled platform. The link information is made persistent with any ODBC enabled database and the schema required can be defined in full release documentation and SQL scripts for the creation of the schema with Oracle, Microsoft SQL Server and Microsoft Access are generally available for employment.

The system can be integrated with any static or dynamic process and, as noted above, can be used to power a web server and can also form part of a process to generate a number of HTML pages. The potential for integration is in no way limited and a particularly important aspect of the system is its open interface and API. The server API of the present invention provides one form a tool for achieving the required functionality and the API can be documented using Javadoc.

A subset of the Java API is made available via a socket interface as illustrated and the system effectively functions so as to run a server arranged to listen for connections and the requests arising are then processed using the above-mentioned API.

It should however be appreciated that the present invention is not limited to the details of the foregoing embodiment and extends to all subject matter falling within the spirit and the scope of the appended claims.

## Claims

1. A system for linking a plurality of information resources, the system comprising a server and a storage medium arranged to be accessed by the server and to store link structure information for each of the said plurality of information resources, the link structure information for each resource representing reference link structure in which that information resource is included, wherein, responsive to a user request for one of said plurality of information resources, the server is arranged to retrieve the link structure information in which the requested information resource is referenced, and wherein the information resource remains unmodified.

2. A system according to Claim 1, and arranged to create a link document from an information resource and then deliver the link document for processing by the server, the server then retrieving the link structure information for delivery to the storage medium.

3. A system according to Claim 1 or 2, wherein the storage medium can comprise a standard database exhibiting standard data back-up features.

4. A system according to Claim 1, 2 or 3, including a graphics tool for the display of the memory content.

5. A system according to Claim 1, 2, 3 or 4, wherein the server is associated with data-fetcher architecture for connection to a plurality of information resources.

6. A system according to any one of Claim 1-5, and arranged to respond to a request from a user for information streams and/or all link structure information associated with a particular information resource.

7. A system according to Claim 5, wherein the server and data-fetcher architecture function such that all information resources are retrieved from their original location.

8. A system according to any one of the preceding claim, wherein the server is arranged to parse an XML file that defines links.

9. A system according to Claim 8, wherein the server is arranged to create an object model for each link defined.

10. A system according to Claim 9, wherein the object structure is made persistent in a database comprising a relational model or an object-orientated database.

11. A system according to any one of the preceding claims, wherein the link structure information defines a link between discrete information resources, particular data fragments or different parts/sections of the same information resource.

12. A system according to any one of the preceding claims, wherein the link structure employs out-of-line links which are defined externally and independently of the information resources.

13. A system according to Claim 12, and arranged such that as each information resource is retrieved, and for each anchor that points into the resource, the link structure associated with that anchor is then arranged to be inserted at that relevant point as specified by the anchor within the information resource such that the arrangement appears as though the link had been created in an in-line manner.

14. A system according to Claim 1, wherein the retrieved link structure information is inserted into a copy of a requested resource as though it had been authored in the requested resource.

15. A method for linking a plurality of information resources, comprising the steps of storing link structure information for each of the plurality of information resources, the link structure information for each information resource representing the link structure in which that information resource is included and, responsive to a user request for one of said plurality of information resources, retrieving the link structure information in which the requested one of the information resources is included and retaining the information resource in an unmodified state.

16. A method according to Claim 15, and including creating a link document from an information resource and delivering the link document for subsequent processing for retrieval of the link structure information and the subsequent storage of the said retrieved link structure information.

17. A method according to Claim 15 or 16, wherein the content of all information resources is retrieved from the original locations of such information resources.

18. A method according to Claim 15, 16 or 17, including parsing an XML file that defines required links and subsequently creates an object model for each link defined.

19. A method according to Claim 15, 16, 17 or 18, including creating a link structure exhibiting a nodal configuration and employing out-of-line links which are defined externally and independently of the information resources.

20. A method according to Claim 15, 16, 17, 18 or 19 and including dynamically inserting link structure information into information content of a retrieved information resource that participates in the said link.
